# EUROPÄISCHE PATENTANMELDUNG

(11) **EP 0 905 426 A2**
(43) Veröffentlichungstag der Anmeldung: **31.03.1999**
(21) Anmeldenummer: 98110810.3
(22) Anmeldetag: 12.06.1998
(51) Int. Cl.: F16L 5/00

(54) **Dichtungsvorrichtung zur Durchführung einer Leitung durch eine Wandöffnung**

(30) Priorität: 12.06.1997 DE 29710234 U; 23.12.1997 DE 19757751
(71) Anmelder: Doyma GmbH & Co, 28876 Oyten (DE)
(72) Erfinder: Ihlenfeldt, Elisabeth, 28876 Oyten (DE); Wildung, Sven, 28329 Bremen (DE); Gillmann, Werner, 28876 Oyten (DE); Lawrowski, Boguslaw, 28329 Bremen (DE)
(74) Vertreter: Eisenführ, Speiser & Partner

(57) **Zusammenfassung**

Die vorliegende Erfindung betrifft eine Dichtungsvorrichtung zum abdichtenden Durchführen mindestens einer Leitung durch einen in einer Wand oder dergleichen ausgebildeten Durchbruch, insbesondere zur nachträglichen Montage an bestehenden Leitungen, mit einem verformbaren Dichtkörper (2, 4), der eine Bohrung (5) zur Aufnahme der Leitung und eine mit der Bohrung verbundene Trennfuge (6, 8) aufweist, so daß der verformbare Dichtkörper in einem Öffnungszustand auf die Leitung aufsetzbar ist, und mit einer Spanneinrichtung (10) zum Verspannen des Dichtkörpers (2, 4) derart, daß dieser im verspannten Zustand abdichtend an die mindestens eine Leitung angepreßt wird. Erfindungsgemäß ist vorgesehen, daß mindestens zwei in axialer Richtung der Leitung hintereinander angeordnete verformbare Dichtkörper (2, 4) vorgesehen sind und daß die Trennfugen (6, 8) der Dichtkörper (2, 4) im montierten Zustand versetzt zueinander angeordnet sind.

## Beschreibung

Die vorliegende Erfindung betrifft eine Dichtungsvorrichtung zum abdichtenden Durchführen mindestens einer Leitung durch einen in einer Wand oder dergleichen ausgebildeten Durchbruch, insbesondere zur nachträglichen Montage an bestehenden Leitungen, mit einem verformbaren Dichtkörper, der eine Bohrung zur Aufnahme der Leitung und eine mit der Bohrung verbundene Trennfuge aufweist, so daß der verformbare Dichtkörper in einem Öffnungszustand auf die Leitung aufsetzbar ist, und mit einer Spanneinrichtung zum Verspannen des Dichtkörpers derart, daß dieser im verspannten Zustand abdichtend an die mindestens eine Leitung angepreßt wird

Derartige Dichtungsvorrichtungen sind bekannt und werden verwendet, um Leitungen, bei denen es sich um Versorgungsleitungen für Gas, Wasser, Elektrizität oder andere Medien handeln kann, durch Durchbrüche in Wänden, Decken, Sohlplatten o. dgl. abdichtend hindurchzuführen. Im montierten, abdichtenden Zustand ist das verformbare Dichtelement einerseits an die äußere Oberfläche der durchzuführenden Leitung und andererseits an die innere Oberfläche des Durchbruchs angepreßt und sorgt auf diese Weise für eine Abdichtung.

Um die Montage der Dichtungsvorrichtung zu vereinfachen und um eine nachträgliche Montage an bestehenden, bereits vollständig installierten Leitungen zu ermöglichen, weist der verformbare, beispielsweise aus Kautschuk bestehende Dichtkörper die Trennfuge auf, so daß er in einem manuell hergestellten Öffnungszustand, in dem die beiden die Trennfuge begrenzenden Trennflächen manuell aufgebogen und die Trennflächen so beabstandet sind, daß die Leitung in die Bohrung einbringbar ist. Bei dieser Dichtungsvorrichtung weist die Spanneinrichtung zwei Spannplatten aus Metall auf, die aus zwei trennbaren Abschnitten bestehen, so daß sie vollständig voneinander getrennt und ebenfalls auf bestehende Leitungen aufgesetzt werden können.

Im montierten Zustand können im Bereich der Trennfuge Undichtigkeiten der Dichtungsvorrichtung entstehen, da die Trennfuge naturgemäß ein Eindringweg für Gas oder Flüssigkeit darstellt. Steht im Bereich der Trennfuge eine Flüssigkeit, beispielsweise Wasser mit einem bestimmten Druck an, so kann die Flüssigkeit in die Trennfuge eindringen und durch die Trennfuge hindurch gepreßt werden, was unerwünscht ist. Das Durchdringen einer Flüssigkeit oder eines Gases kann noch dadurch begünstigt werden, daß Schmutzpartikel in der Trennfuge sind, so daß unerwünschte Durchdringwege entstehen.

Aus der europäischen Patentschrift EP 0 355 270 B1 ist eine Dichtungsvorrichtung der eingangs genannten Art bekannt, bei der der verformbare Dichtkörper in einem Ausführungsbeispiel eine Trennfuge aufweist, die nicht durch einen gradlinigen Schnitt gebildet ist, sondern labyrinthartig ausgestaltet ist. Durch die labyrinthartige Ausgestaltung der Trennfuge wird das unerwünschte Durchdringen einer Flüssigkeit oder eines Gases durch die Trennfuge erschwert. Nachteilig an dieser Vorrichtung ist jedoch, daß die Herstellung einer derartigen labyrinthartigen Dichtfuge sehr aufwendig und teuer ist.

Der vorliegenden Erfindung liegt die Aufgabe zugrunde, eine Dichtungsvorrichtung der eingangs genannten Art anzugeben, die die Nachteile des Standes der Technik vermeidet, einfach herstellbar ist, gute Dichteigenschaften sowie eine große mechanische Festigkeit aufweist.

Die Aufgabe wird bei einer Vorrichtung der eingangs genannten Art erfindungsgemäß dadurch gelöst, daß mindestens zwei in axialer Richtung der Leitung hintereinander angeordnete verformbare Dichtkörper vorgesehen sind und
daß die Trennfugen der Dichtkörper im montierten Zustand versetzt zueinander angeordnet sind.

Die Vorteile der Erfindung liegen insbesondere darin, daß aufgrund der Anordnung der mindestens zwei verformbaren Dichtkörper derart, daß deren Trennfugen im montierten Zustand versetzt zueinander angeordnet sind, eine besonders hohe Dichtwirkung auf konstruktiv einfache und somit kostengünstige Weise erzielt wird. Die Trennfugen der Dichtkörper können als einfache Schnitte durch die Dichtkörper ausgebildet sein. Durch die erfindungsgemäße Versetzung der Trennfugen ist es einer an der Dichtungsvorrichtung unter Druck anstehenden Flüssigkeit oder einem Gas nur sehr schwer möglich, die Dichtungsvorrichtung in unerwünschter Weise zu durchdringen. Durch die versetzte Anordnung entsteht eine Art Labyrinth mit einem relativ langen verwinkelten Strömungsweg für ein unerwünscht eindringendes Fluid. Dadurch weist die Dichtungsvorrichtung sehr gute Abdichteigenschaften auf.

Die Erfindung löst die Aufgabe ferner dadurch, daß die Trennfuge im montierten Zustand im wesentlichen schrägwinklig zur Längsachse der mindestens einen Leitung angeordnet ist.

Durch die erfindungsgemäß schrägwinklige Anordnung der Trennfuge relativ zur Längsachse der Leitung läßt sich die Abdichtwirkung der Dichtungsvorrichtung weiter erhöhen. Durch die schräge Anordnung entsteht im verspannten Zustand eine Kraftkomponente in axialer Richtung an dem verformbaren Dichtkörper, die für eine lokal erhöhte Anpressung des Dichtkörpers sorgt.

Die Erfindung löst die Aufgabe ferner bei einer Dichtungsvorrichtung der eingangs genannten Art, bei der die Spanneinrichtung zwei im wesentlichen formstabile Spannplatten aufweist, die jeweils aus zwei trennbaren Abschnitten bestehen, dadurch, daß die zwei Abschnitte einer Spannplatte zur Befestigung aneinander Vorsprünge und/oder Ausnehmungen aufweisen, die mit korrespondierenden Ausnehmungen bzw. Vorsprüngen des jeweils anderen Abschnitts der Spannplatte formschlüssig in Eingriff bringbar sind.

Durch diese Befestigung der Abschnitte der Spannplatten läßt sich die Dichtungsvorrichtung einerseits auf einfache Weise montieren. Andererseits weisen die zusammengesetzten Spannplatten eine hohe Festigkeit auf, die der Festigkeit ungeteilter Spannplatten sehr nahe kommt.

Die Erfindung löst die Aufgabe ferner bei einer Dichtungsvorrichtung der eingangs genannten Art, bei der die Spanneinrichtung zwei im wesentlichen formstabile Spannplatten aufweist, die jeweils aus zwei trennbaren Abschnitten bestehen, dadurch, daß die zwei trennbaren Abschnitte einer Spannplatte mittels mindestens eines Bügels aneinander fixierbar sind.

Sind erfindungsgemäß die zwei trennbaren Abschnitte einer Spannplatte mittels mindestens eines Bügels aneinander fixierbar, so läßt sich insbesondere bei Durchführungsvorrichtungen mit großen Ausmessungen erreichen, daß die Durchführungsvorrichtung eine große Stabilität erhält. Mit Hilfe der erfindungsgemäßen Bügel können die zwei trennbaren Abschnitte auf besonders einfache und schnelle Weise montiert und gegebenenfalls wieder demontiert werden. Die Bügel sorgen im montierten Zustand für eine zuverlässige Verbindung der trennbaren Abschnitte.

Besonders bevorzugt ist eine Ausführungsform, bei der der Bügel die zwischen den zwei Abschnitten einer Spannplatte ausgebildeten Trennfugen mindestens teilweise überdeckt, da auf diese Weise die labyrinthartige Ausgestaltung zur Verbesserung der Dichtwirkung - räumlich - erweitert und die Dichtwirkung der Dichtungsvorrichtung weiter erhöht wird.

Vorteilhaft ist ferner eine Ausführungsform, bei der zwei gegenüber angeordnete Bügel mittels Spannbolzen an den trennbaren Abschnitten der Spannplatten befestigt sind. Mit Hilfe der Spannbolzen werden bei dieser Ausführungsform einerseits der oder die elastischen Dichtkörper axial verpreßt und gleichzeitig die Bügel sich an den Spannplatten befestigt, so daß die Spannbolzen eine Doppelfunktion ausüben.

Gemäß einer Weiterbildung der Erfindung weist der Bügel eine Durchgangsbohrung und ein Langloch auf, so daß der Bügel um eine mittig in dem Langloch liegenden Achse derart verschwenkbar ist, daß das Langloch in bzw. außer Eingriff mit einem Abschnitt oder Ansatz des gegenüberliegenden trennbaren Abschnitts einer Spannplatte bringbar ist, um die zwei trennbaren Abschnitte aneinander zu befestigten bzw. voneinander zu lösen. Eine derartige Dichtungsvorrichtung kann auf einfache und schnelle Weise montiert und demontiert werden.

Zweckermäßigerweise ist ein Bügel mittels mindestens eines Stiftes an den trennbaren Abschnitten der Spannplatten befestigt. Der oder die mehreren Stifte sind vorzugsweise in den trennbaren Abschnitt einer Spannplatte mittels einer Preßpassung eingepreßt. Auf diese Weise ist eine kostengünstige und solide Konstruktion realisiert.

Besonders bevorzugt ist auch eine Ausführungsform, bei der der Bügel mindestens abschnittsweise elastisch verformbar ist, so daß er nach Art eines Clip-Verschlusses die beiden trennbaren Abschnitte einer Spannplatte aneinander befestigt. Die elastische Ausbildung des Bügels erleichtert zusätzlich die Montage oder Demontage der Dichtungsvorrichtung.

Zweckmäßigerweise weist der Bügel zwei voneinander beabstandete und relativ zueinander aufspreizbare Klemmabschnitte auf, die mittels eines Verbindungsabschnitts miteinander verbunden sind. Ein derartiger Bügel ist wie eine Klammer ausgebildet, die eine besonders einfache Montage ermöglicht. Gemäß einer Weiterbildung weist der Bügel zwei zwischen den Klemmabschnitten angeordnete Ausnehmungen auf, in denen im montierten Zustand Stifte oder andere Abschnitte des jeweils anderen Abschnitts der Spannplatten angeordnet sind, so daß der klammerartige Bügel gegen ein unerwünschtes Herausschieben oder Herausfallen gesichert ist. Die Montierbarkeit des Bügels läßt sich weiter verbessern, wenn der Bügel einen abstehenden Ansatz zum Verschieben des Bügels aufweist.

Bei einer alternativen Ausführungsform ist der Bügel als mindestens abschnittsweise gekrümmter, flacher Streifen aus einem Kunststoff oder Metall ausgebildet, der sich kostengünstiger herstellen läßt. Ein flaches Streifen-Material ist ferner in einer vorgebbaren Richtung einfach elastisch verformbar.

Gemäß einer weiteren alternativen Ausführungsform besteht der Bügel aus zwei Teilen, die miteinander verrastbar oder hintergreifend in Eingriff bringbar sind. Der Bügel kann auch hier als flacher Streifen ausgebildet sein.

Gemäß einer alternativen bevorzugten Ausführungsform der Erfindung sind die Vorsprünge und Ausnehmungen der zwei Abschnitte einer Spannplatte nach Art einer Schwalbenschwanzführung ausgebildet. Eine Befestigung der trennbaren Abschnitte nach Art einer Schwalbenschwanzführung, bei der die Vorsprünge und Ausnehmungen im wesentlichen in einer axialen Richtung der Dichtungsvorrichtung verlaufen, läßt sich auf einfache Weise durch ein axiales Ineinanderschieben montieren und gewährleistet gleichzeitig eine sichere Verbindung der trennbaren Abschnitte.

Gemäß einer alternativen Ausführungsform erstrecken sich die Vorsprünge und Ausnehmungen der zwei Abschnitte einer Spannplatte im wesentlichen in radialer Richtung, so daß sie ebenfalls auf einfache Weise miteinander verrastet und somit sicher verbunden werden können.

Entsprechend einer bevorzugten Ausführungsform der Erfindung fluchten die Trennfugen der Dichtkörper im montierten Zustand in einer axialen Projektion nicht miteinander, um die erfindungsgemäß herstellbare gute Dichtfunktion zu erzielen.

Gemäß einer weiteren vorteilhaften Ausführungsform der Erfindung sind die Trennfugen zwischen zwei Abschnitten einer Spannplatte und die Trennfugen der Dichtkörper im montierten Zustand versetzt zueinander angeordnet. Auf diese Weise läßt sich die Dichtwirkung der erfindungsgemäßen Vorrichtung weiter erhöhen, da die zuvor beschriebene labyrinthartige Anordung der Trennfugen räumlich erweitert wird.

Besonderes bevorzugt ist eine Ausführungsform, bei der die Trennfuge im wesentlichen in einer Ebene liegt, die relativ zur Längsachse der Leitung im Bereich der Dichtungsvorrichtung geneigt ist. Vorzugsweise ist die Ebene um ca. 5 bis 30° relativ zur Längsachse geneigt. Durch diese Anordnung wird die zuvor beschriebene lokale Anpressung aufgrund einer axialen Kraftkomponente günstig verwirklicht.

Gemäß einer Weiterbildung der Erfindung weist die Spanneinrichtung mehrere die Dichtkörper durchsetzende und die Spannplatten miteinander verbindende Spannbolzen auf, die mit Hilfe von Spannmuttern unter Zugspannung bringbar sind. Die Spanneinrichtung ist hierbei auf konstruktiv einfache Weise verwirklicht.

Vorzugsweise sind - gemäß einer Weiterbildung der Erfindung - die Spannplatten aus Metall und der/die Dichtkörper aus einem gummielastischen Material hergestellt.

Bevorzugt ist ferner eine Ausführungsform, bei der eine Spannplatte zur Anlage an der Wand oder dergleichen eine solche Größe aufweist, daß sie nicht in den Durchbruch einführbar ist. Auf diese Weise wird erreicht, daß die Spannplatte an der den Durchbruch aufweisenden Wand zur Anlage kommt und eine axiale Verschiebung der Spannplatte und somit der gesamten Dichtungsvorrichtung in axialer Richtung verhindert. Insbesondere wird verhindert, daß die Dichtungsvorrichtung bei größeren auf die Dichtungsvorrichtung wirkenden Drücken relativ zur Wand verschoben wird. Vorzugsweise ist die Spannplatte im wesentlich als Ringscheibe ausgebildet, deren Außendurchmesser größer als der Außendurchmesser der Dichtkörper ist.

Gemäß einer weiteren bevorzugten Ausführungsform sind die Dichtkörper miteinander verklebt oder aneinander vulkanisiert. Auf diese Weise läßt sich die Dichtwirkung und die Festigkeit der Dichtungsvorrichtung weiter erhöhen.

Eine alternative Ausführungsform der Erfindung zeichnet sich dadurch aus, daß zwischen den verformbaren Dichtkörpern ein im wesentlichen starrer Zwischenring angeordnet ist, der die Dichtungsvorrichtung zusätzlich stabilisiert. Vorzugsweise ist auch der Zwischenring aus mindestens zwei trennbaren Abschnitten zusammengesetzt, so daß er einfach an bestehenden Leitungen montierbar ist.

Zur Erhöhung der Abdichtwirkung ist der Zwischenring vorzugsweise so angeordnet ist, daß eine zwischen den trennbaren Abschnitten verlaufende Trennfuge versetzt zu den Trennfugen der Dichtkörper angeordnet ist.

Bei einer weiteren bevorzugten Ausführungsform der Erfindung ist vorgesehen, daß der oder die verformbaren Dichtkörper jeweils mindestens einen äußeren Teil und mindestens einen in den äußeren Teil hineinsteckbaren inneren Teil aufweist und daß der äußere Teil und der innere Teil jeweils mindestens eine Trennfuge aufweist, durch die eine Leitung in den äußeren Teil bzw. inneren Teil einführbar ist. Ein derartiger geteilter, verformbarer Dichtkörper kann auf einfache Weise an unterschiedliche hindurchzuführende Leitungen, die beispielsweise verschiedene Durchmesser aufweisen, angepaßt werden, ohne daß der gesamte verformbare Dichtkörper ausgetauscht werden müßte. Bei einer derartigen Anpassung an unterschiedliche Leitungen braucht nur der innere Teil des Dichtkörpers ausgetauscht zu werden, während der äußere Teil des Dichtkörpers sowie die sämtlichen anderen Bestandteile der Dichtungsvorrichtung unverändert bleiben können. Auf diese Weise läßt sich eine große Flexibilität der Dichtungsvorrichtung erzielen.

Gemäß einer Weiterbildung dieser Ausführungsform ist vorgesehen, daß der innere Teil mehrere Bohrungen zur Aufnahme mehrerer Leitungen aufweist.

Die Erfindung ist nachstehend anhand von mehreren Ausführungsbeispielen unter Bezugnahme auf die beiliegenden Figuren beschrieben. Es zeigen:
- Fig. 1: ein erstes Ausführungsbeispiel einer erfindungsgemäßen Dichtungsvorrichtung mit versetzt angeordneten Trennfugen in einer Seitenansicht;
- Fig. 2: ein zweites Ausführungsbeispiel einer erfindungsgemäßen Dichtungsvorrichtung mit versetzt und schräg angeordneten Trennfugen der Dichtkörper in einer Seitenansicht;
- Fig. 3: das in Fig. 2 dargestellte zweite Ausführungsbeispiel in einer Draufsicht;
- Fig. 4: ein drittes Ausführungsbeispiel einer erfindungsgemäßen Dichtungsvorrichtung mit schräg angeordneter Trennfuge des Dichtkörpers in einer Seitenansicht;
- Fig. 5: ein viertes Ausführungsbeispiel einer erfindungsgemäßen Dichtungsvorrichtung in einer Draufsicht;
- Fig. 6: ein fünftes Ausführungsbeispiel einer erfindungsgemäßen Dichtungsvorrichtung in einer Seitenansicht;
- Fig. 7: einsechstes Ausführungsbeispiel einer erfindungsgemäßen Dichtungsvorrichtung;
- Fig. 8: ein siebtes Ausführungsbeispiel einer erfindungsgemäßen Dichtungsvorrichtung in einer Seitenansicht;
- Fig. 9: das Ausführungsbeispiel gemäß Figur 8 in einer Draufsicht;
- Fig. 10: ein achtes Ausführungsbeispiel einer erfindungsgemäßen Dichtungsvorrichtung in einer Seitenansicht;
- Fig. 11: das Ausführungsbeispiel gemäß Figur 10 in einer Draufsicht;
- Fig. 12: eine Schnittdarstellung eines erfindungsgemäßen Bügels zur Befestigung zweier Abschnitte einer Spannplatte;
- Fig. 13: der Bügel aus Fig. 12 in einer Draufsicht;
- Fig. 14: ein alternatives Ausführungsbeispiel eines erfindungsgemäßen Bügels zur Befestigung zweier Abschnitte der Spannplatten aneinander in einer Schnittdarstellung;
- Fig. 15: der Bügel aus Fig. 14 in einer Draufsicht;
- Fig. 16: eine Schnittdarstellung eines alternativen Ausführungsbeispiels eines Bügels;
- Fig. 17: der Bügel aus Fig. 16 in einer Draufsicht;
- Fig. 18: ein alternatives Ausführungsbeispiel eines erfindungsgemäßen Bügels in einer Schnittdarstellung;
- Fig. 19: der Bügel aus Fig. 18 in einer Seitenansicht;
- Fig. 20: ein alternatives Ausführungsbeispiel eines erfindungsgemäßen zweigeteilten Bügels zur Befestigung zweier Abschnitte einer Spannplatte in einer Seitenansicht;
- Fig. 21: der in Fig. 20 dargestellte Bügel in einer Draufsicht;
- Fig. 22: ein alternatives Ausführungsbeispiel der erfindungsgemäßen Dichtungsvorrichtung mit sich im wesentlichen radial erstreckenden Vorsprüngen und Ausnehmungen in einer Schnittdarstellung;
- Fig. 23: das in Fig. 22 dargestellte Ausführungsbeispiel in einer Draufsicht;
- Fig. 24: ein weiteres Ausführungsbeispiel einer erfindungsgemäßen Dichtungsvorrichtung in einer Seitenansicht;
- Fig. 25: das Ausführungsbeispiel gemäß Figur 24 in einer Draufsicht;
- Fig. 26: ein alternatives Ausführungsbeispiel einer erfindungsgemäßen Dichtungsvorrichtung mit einem geteilten, zweiteiligen verformbaren Dichtkörper in einer perspektivischen Darstellung.

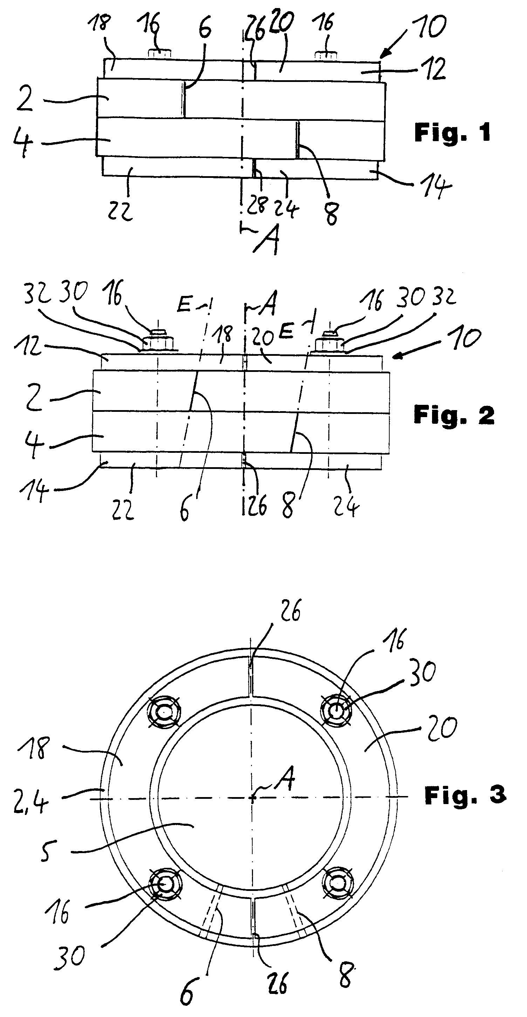

Das in Fig. 1 dargestellte erste Ausführungsbeispiel einer erfindungsgemäßen Dichtungsvorrichtung zum abdichtenden Durchführen mindestens einer Leitung weist zwei benachbart zueinander angeordnete und sich im montierten Zustand berührende elastisch verformbare Dichtkörper 2,4 auf, die im wesentlichen die Form eines Kreisrings haben. Die Dichtkörper 2, 4 sind mit einer oder mehrerer, der Anzahl der durchzuführenden Leitungen entsprechender Bohrungen ausgebildet, durch die im montierten Zustand die durchzuführende Leitung bzw. die mehreren Leitungen hindurchgeführt sind. Die in Fig. 1 dargestellte Dichtungsvorrichtung ist zum Durchführen eines zylindrischen Rohres ausgebildet, so daß die in den Dichtkörpern 2, 4 ausgebildeten Bohrungen ebenfalls zylindrisch sind. Bei den durchzuführenden Leitungen kann es sich um Rohre für Flüssigkeiten oder Gase, elektrische Leitungen oder dergleichen handeln.

Die Dichtkörper 2, 4 weisen jeweils eine sich im wesentlichen in Richtung einer Längsachse A der Leitung und der Dichtungsvorrichtung erstreckende und den ringkörperartigen Dichtkörper 2, 4 vollständig durchsetzende Trennfuge 6, 8 auf, die jeweils durch zwei an den Dichtkörpern 2, 4 ausgebildete, ebene Schnitt- oder Trennflächen begrenzt sind. Die in Fig. 1 ausgebildeten Trennfugen 6, 8 und die zugehörigen Trennflächen erstrecken sich radial nach innen in Richtung auf die Längsachse A. Die Trennfugen 6, 8 sind im montierten, in Fig. 1 dargestellten Zustand versetzt zueinander angeordnet, so daß sie in einer axialen Projektion auf eine senkrecht zu der Längsachse A angeordneten gedachten Projektionsfläche nicht miteinander fluchten.

Aufgrund der Trennfugen 6, 8 der elastisch verformbaren Dichtkörper 2, 4 können diese zur Montage an einer bereits bestehenden Leitung, auf die die kreisringförmigen Dichtkörper 2, 4 nicht mehr über deren Enden aufgeschoben werden können, auf einfache Weise auf die Leitung aufgesetzt werden, indem die Dichtkörper 2, 4 manuell derart aufgebogen werden, daß die Trennfugen 6, 8 durch Auseinanderbewegen der sie - im montierten Zustand - begrenzenden Trennflächen der Dichtkörper 2, 4 auseinanderbewegt werden. Hierbei werden die Dichtkörper 2, 4 elastisch verformt und auf die Leitung aufgesetzt werden. Nach der Rückverformung umgeben sie anschließend im montierten Zustand die Leitung vollständig.

Eine Spanneinrichtung 10 zum Verspannen der Dichtkörper 2, 4 derart, daß diese im verspannten Zustand abdichtend an die äußere Oberfläche der mindestens einen Leitung angepreßt sind, umfaßt im wesentlichen zwei beabstandet und parallel zueinander angeordnete, im wesentliche formstabile Spannplatten 12, 14, zwischen denen die Dichtkörper 2, 4 angeordnet sind, sowie mehrere, im Ausführungsbeispiel vier die Spannplatten 12, 14 miteinander verbindende Spannbolzen 16 mit einem Sechskantkopf. Die Spannbolzen 16 sind parallel zur Längsachse A angeordnet und durchsetzen die Spannplatte 12 sowie die Dichtkörper 2, 4 und sind mittels eines Außengewindes mit der Spannplatte 14 verschraubt, in welcher mehrere mit Innengewinden versehene Bohrungen zum Einschrauben der Spannbolzen 16 ausgebildet sind.

Durch Einschrauben der Spannbolzen 16 in die in der Spannplatte 14 ausgebildeten Innengewinde werden die Spannplatten 12, 14 aufeinander zubewegt und relativ zueinander verspannt, so daß die zwischen den Spannplatten 12, 14 angeordneten Dichtkörper 2, 4 axial zusammengepreßt werden. Durch die axiale Kompression tendieren die Dichtkörper 2, 4 dazu, sich radial zu erweitern und werden an die die Dichtkörper 2, 4 durchsetzende Leitung angepreßt, so daß zwischen der äußeren Oberfläche der Leitung und den der Leitung zugewandten Oberflächen der Dichtkörper 2, 4 eine Abdichtung hergestellt ist. Gleichzeitig werden die äußeren Oberflächen der Dichtkörper 2, 4 an die Innenwandungen eines Durchbruchs abdichtend angepreßt, welcher in einer Wand, Decke, Sohlplatte oder dergleichen ausgebildet ist. Mit Hilfe der Spanneinrichtung 10 werden die Dichtkörper 2, 4 somit einerseits abdichtend gegen die Leitung und andererseits gegen den Durchbruch abdichtend angepreßt.

Die Spannplatten 12, 14 der Spanneinrichtung 10 sind, wie auch Fig. 3 für das unten beschriebene zweite Ausführungsbeispiel gemäß Fig. 2 zeigt, zweiteilig ausgebildet und weisen zwei im wesentlichen halbringförmige Abschnitte 18, 20 bzw. 22, 24 auf, die im montierten Zustand (vgl. Fig. 1) im wesentlichen einen Kreisring bilden. Aufgrund der zweiteiligen Ausbildung der Spannplatten 12, 14 können diese problemlos derart an bereits montierten Leitungen installiert werden, indem die beiden Abschnitte 18, 20 bzw. 22, 24 an der Leitung zusammengesetzt werden.

Die durch die zweiteilige Ausbildung der Spannplatten 12, 14 entstehenden Trennfugen 26, 28 sind im montierten Zustand versetzt zu den Trennfugen 6, 8 der Dichtkörper 2, 4 angeordnet. Auf diese Weise entsteht eine Verbindung der Spannplatten 12, 14 und der Dichtkörper 2, 4 nach Art eines versetzten Mauerwerkes. In nicht dargestellter Weise könnten die Spannplatten 12, 14 auch einteilig ausgebildet sein, so daß sie zur Montage der Dichtungsvorrichtung über ein Ende einer Leitung aufgeschoben werden müßten.

Das in Fig. 2 dargestellte zweite Ausführungsbeispiel der erfindungsgemäßen Abdichtungsvorrichtung unterscheidet sich im wesentlichen von dem ersten in Fig. 1 dargestellten Ausführungsbeispiel dadurch, daß die Trennfugen 6, 8 der Dichtkörper 2, 4 im dargestellten montierten Zustand im wesentlichen schrägwinklig zu der Längsachse A der Dichtungsvorrichtung verlaufen. Die die Trennfugen 6, 8 begrenzenden, an den Dichtkörpern 2, 4 ausgebildeten Trennflächen sind - wie bei ersten Ausführungsbeispiel - im wesentlichen radial in bezug auf die Längsachse A verlaufend und eben. Die durch die Trennflächen definierte Ebene E ist gegenüber der Längsachse A geneigt.

Die Spanneinrichtung 10 des zweiten Ausführungsbeispiels unterscheidet sich von der Spanneinrichtung 10 des ersten Ausführungsbeispiels dadurch, daß die Spannbolzen 16 mit einem Ende fest mit der - in Fig. 2 unteren - Spannplatte 14 verbunden sind und mit Hilfe von Sechskantmuttern 30 derart unter Zugspannung gebracht werden können, daß die Spannplatte 12 und die Spannplatte 14 so verspannt werden, daß die Dichtkörper 2, 4 axial komprimiert und dadurch abdichtend an die durchzuführende Leitung und die Innenwandung eines Durchbruchs angepreßt werden. Zwischen den Sechskantmuttern 30 und der Spannplatte 12 sind Unterlegscheiben 32 angeordnet.

Die Draufsicht der Fig. 3 veranschaulicht die zwei Abschnitte 18, 20 der Spannplatte 12 und die versetzte Anordnung der Trennfugen 26 der Spannplatte 12 relativ zu den Trennfugen 6, 8 der Dichtkörper 2, 4.

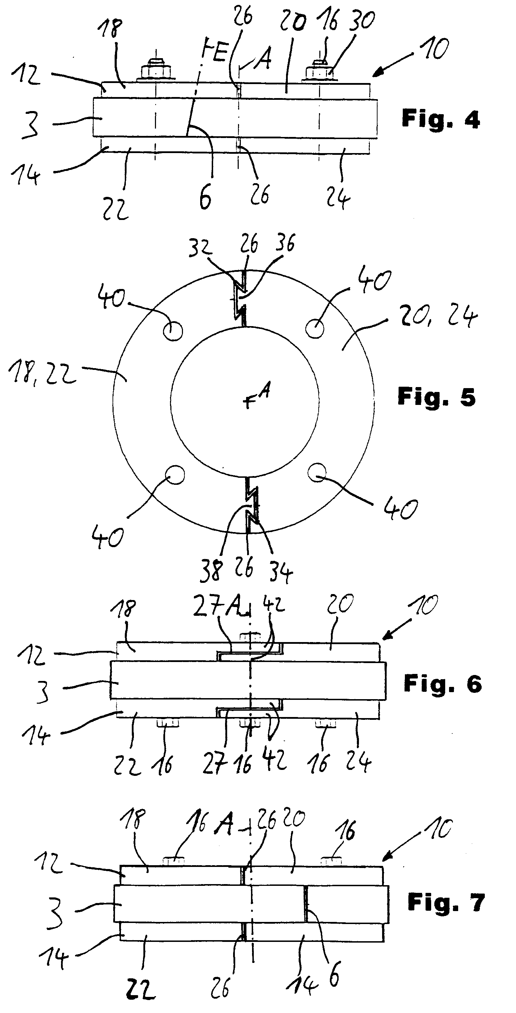

Das in Fig. 4 dargestellte dritte Ausführungsbeispiel weist gegenüber den zuvor beschriebenen Ausführungsbeispielen nur einen Dichtkörper 3 auf, der eine schrägwinklig relativ zu der Längsachse A angeordnete Trennfuge 6 aufweist. Die durch die Trennfuge 6 definierte Ebene E ist geneigt gegenüber der Längsachse A. Ansonsten entspricht das in Fig. 4 dargestellte Ausführungsbeispiel im wesentlichen den zuvor beschriebenen Ausführungsbesispielen, so daß zur Vermeidung von Wiederholungen auf die obigen Beschreibungen Bezug genommen wird.

Fig. 5 veranschaulicht eine alternative Ausgestaltung der ringförmigen Spannplatten 12, 14, bei der die zwei Abschnitte 18, 20 bzw. 22, 24 der Spannplatten 12 bzw. 14 mit Hilfe von in den Abschnitten 18, 20 bzw. 22, 24 ausgebildeten Ausnehmungen 32, 34 und mit diesen Ausnehmungen 32, 34 zusammenwirkenden Vorsprüngen 36, 38 ausgebildet sind, die formschlüssig miteinander in Eingriff bringbar sind. In den in Fig. 5 dargestellten Ausführungsbeispiel sind die Ausnehmungen 32, 34 und die Vorsprünge 36, 38 nach Art einer sogenannten Schwalbenschwanzführung ausgebildet und lassen sich durch eine axiale Verschiebung der Abschnitte 18 und 20 bzw. 22 und 24 relativ zueinander in Eingriff bringen. Die Abschnitte 18, 20, 22, 24 sind mit zylindrischen Durchgangsbohrungen 40 versehen, durch die die Spannbolzen 16 hindurchsteckbar sind. Die Durchgangsbohrungen 40 fluchten mit zylindrischen Durchgangsbohrungen (nicht dargestellt), die in den Dichtkörpern 2, 3, 4 ausgebildet sind.

Bei dem in Fig. 6 dargestellten fünften Ausführungsbeispiel sind die die elastisch verformbaren Dichtkörper 3 im montierten Zustand komprimierenden Spannplatten 12, 14 jeweils in zwei Abschnitte 18, 20 bzw. 22, 24 geteilt. Die zwischen den Abschnitten 18, 20 bzw. 22, 24 ausgebildeten Trennfugen 27 haben in der Seitenansicht nach Fig. 6 eine Z-form. Die im wesentichen halbringförmig ausgebildeten Abschnitte 18, 20, 22, 24 weisen jeweils Vorsprünge 42 auf, die sich im montierten Zustand überlappen. In nicht dargestellter Weise können anstelle des einen Dichtkörpers 3 zwei Dichtkörper 2, 4 gemäß den in den Fig. 1 und 2 dargestellten Ausführungsbeispielen vorgesehen sein. Die in Fig. 6 dargestellte Spanneinrichtung 10 entspricht ansonsten im wesentlichen den zuvor beschriebenen Spanneinrichtungen 10, so daß zur Vermeidung von Wiederholungen hierauf Bezug genommen wird.

Das in Fig. 7 dargestellte weitere Ausführungsbeispiel unterscheidet sich von dem zuvor von Fig. 4 beschriebenen Ausführungsbeispiel dadurch, daß die Trennfuge 6 des Dichtkörpers 3 im wesentlichen parallel zur Längsachse A angeordnet ist. Die Abschnitte 18, 20 der Spannplatte 12 und die Abschnitte 22, 24 der Spannplatte 14 sind mittels einer in Fig. 5 dargestellten schwalbenschwanzartigen Verbindung im montierten Zustand aneinander befestigt. Die Spanneinrichtung 10 entspricht den zuvor beschriebenen Spanneinrichtungen 10.

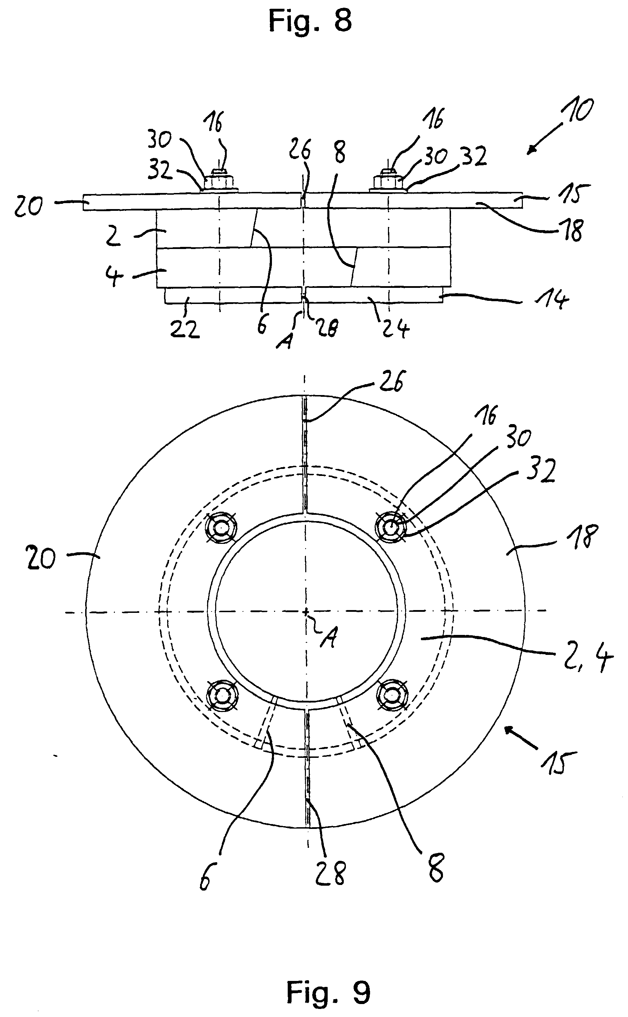

Das in den Figuren 8 und 9 dargestellte weitere Ausführungsbeispiel unterscheidet sich von der in den Figuren 2 und 3 gezeigten Dichtungsvorrichtung, auf deren Beschreibung Bezug genommen wird, dadurch, daß die Spannplatte 15 eine solche Größe aufweist, daß sie nicht in den Durchbruch einführbar ist. Die Spannplatte 15 ist als Ringscheibe ausgebildet und weist einen Durchmesser auf, der größer ist als der Außendurchmesser der Dichtkörper 2, 4 sowie der Außendurchmesser der Spannplatte 14. Im montierten Zustand liegt die Spannplatte 15 an der Wand oder dergleichen an und verhindert eine axiale Bewegung der Dichtungsvorrichtung in Richtung auf die Wand. Auf diese Weise wird eine Bewegung der Dichtungsvorrichtung im Fall von Druckdifferenzen zwischen den durch die Dichtungsvorrichtung voneinander getrennten Räumen verhindert.

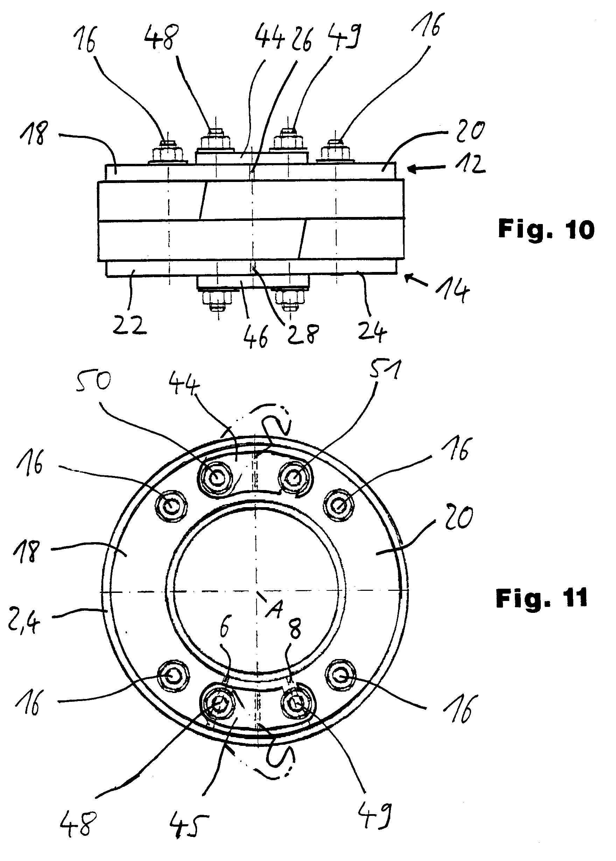

Das in den Figuren 10 und 11 dargestellte weitere Ausführungsbeispiel ist im wesentlich ähnlich zu der in den Figuren 2 und 3 gezeigten Dichtungsvorrichtung, auf deren obige Beschreibung Bezug genommen wird, es unterscheidet sich aber dadurch, daß die zwei trennbaren Abschnitte 18, 20, 22, 24 einer Spannplatte 12, 14 mittels mindestens eines schwenkbaren, starren Bügels 44, 45, 46 aneinander fixierbar sind. Die insgesamt vier Bügel 44, 45, 46 überdecken die zwischen den zwei Abschnitten 18, 20, 22, 24 einer Spannplatte 12, 14 ausgebildeten Trennfugen 26, 28. Zwei gegenüber angeordnete Bügel 44, 46 sind mittels Spannbolzen 48, 49, 50, 51 an den trennbaren Abschnitten 18, 20, 22, 24 der Spannplatten 12, 14 befestigt. Jeder Bügel 44, 45, 46 weist eine Durchgangsbohrung und ein Langloch auf, durch die die Spannbolzen 48, 49, 50, 51 im montierten Zustand ragen. Muttern sorgen für eine Verspannung der Bügel 44, 45, 46.

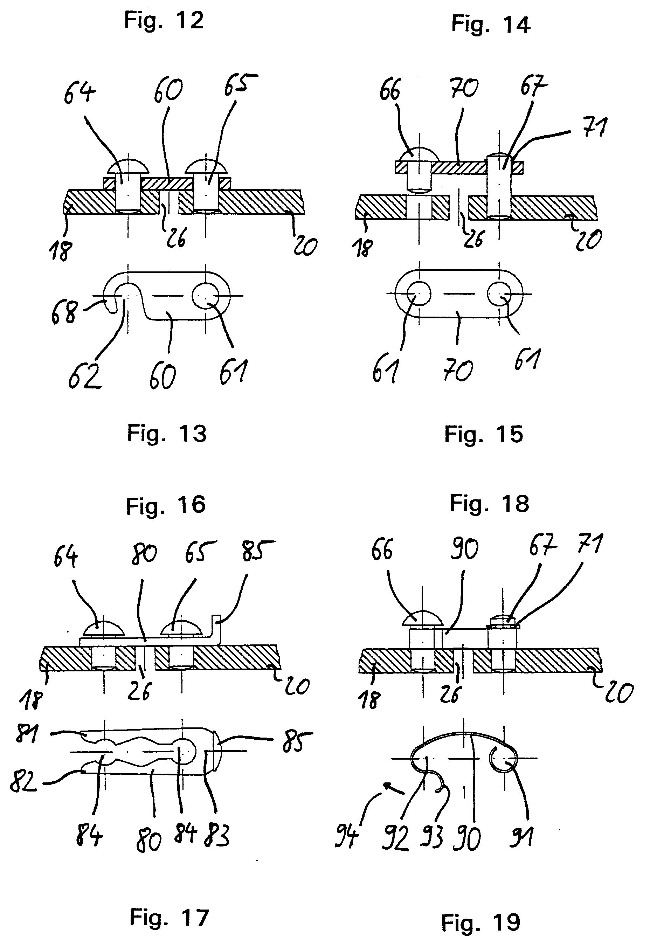

Fig. 12 zeigt in einer Schnittdarstellung eine alternative Ausführungsform der Erfindung, die der zuvor beschriebenen prinzipiell ähnlich ist, mit einem Bügel 60, der, wie Fig. 13 veranschaulicht, eine Durchgangsbohrung 61 und ein Langloch 62 aufweist. Im montierten Zustand ragt durch die Durchgangsbohrung 61 ein Stift 65, der einen erweiterten Kopf aufweist und mittels einer Preßpassung fest in eine in den Abschnitt 20 einer Spannplatte 12, 14 ausgebildeten Bohrung eingepreßt ist. Auf diese Weise ist der Bügel 60 verschwenkbar um eine Zentralachse des Stiftes 65 an den Abschnitt 20 angeordnet. Im Bereich des Langlochs 62 ist im montierten Zustand ein weiterer Stift 64 angeordnet, der ebenfalls einen erweiterten Kopf aufweist und mit einer Preßpassung fest mit dem Abschnitt 18 der Spannplatte 12, 14 verbunden ist. Der Bügel 60 überdeckt teilweise eine Trennfuge 26, 28 (vgl. Fig. 10 und 11). Wie aus Fig. 13 ersichtlich ist, ist das Langloch 62 etwas schräg verlaufend angeordnet und wird durch einen ebenfalls etwas schräg angeordneten Hakenabschnitt 68 begrenzt.

Zur Montage des Bügels 60 zur Verbindung der beiden voneinander trennbaren Abschnitte 18 und 20 einer Spannplatte 12, 14 wird zunächst der Bügel 60 mittels des Stiftes 65 an dem Abschnitt 20 fixiert. Anschließend wird die gesamte Dichtungsvorrichtung an mindestens einer durchzuführenden Leitung zusammengesetzt und in einen Durchbruch eingesetzt. Der Bügel 60 wird so verschwenkt, daß das Langloch 62 von dem Stift 64 durchsetzt wird. Durch die zuvor beschriebene schräge Anordnung des Langlochs 62 ist ein unerwünschtes Zurückschwenken des Bügels 60 weitgehend ausgeschlossen. Der Bügel 60 besteht aus einem im wesentliche starren Kunststoff oder Metall.

Gemäß der in Fig. 14 dargestellten alternativen Ausführungsform weist ein Bügel 70 zwei Durchgangsbohrungen 61 auf, vgl. Fig. 15, die im montierten Zustand von einem Stift 66 mit einem Kopf und einem Stift 67 durchsetzt werden. Der Stift 67 wird zur Montage des Bügels 70 zur Verbindung der beiden Abschnitte 18, 20 einer Spannplatte 12 mittels einer Preßpassung fest in eine in dem Abschnitt 20 ausgebildete zylindrische Bohrung eingepreßt. Anschließend wird der Bügel 70 über den Stift 67 geschoben und es wird ein Sicherungsring 71 in eine umlaufende, in dem Stift 67 ausgebildete Nut eingesetzt, so daß der Bügel 70 in seiner axialen Bewegung begrenzt ist. Anschließend wird der Stift 66 durch die Bohrung 60 gesteckt und zusammen mit dem Bügel 70 in Richtung auf die Abschnitte 18 und 20 bewegt. Der Stift 66 wird fest in eine in dem Abschnitt 18 ausgebildete Bohrung eingepreßt. Auf diese Weise sind die Abschnitte 18 und 20 einer Spannplatte 12, 14 (vgl. Fig. 10 und 11) lösbar miteinander verbunden.

Bei den in den Fig. 16 und 17 dargestellten alternativen Ausführungsbeispiel eines Bügels 80 ist dieser abschnittsweise elastisch verformbar. Der Bügel 80 weist zwei voneinander beabstandete aufspreizbare Klemmabschnitte 81, 81 auf, die mittels eines Verbindungsabschnitts 83 miteinander verbunden sind, so daß der Bügel 80 nach Art einer Klammer ausgebildet ist. Zwischen den Klemmabschnitten 81, 82 sind, wie Fig. 17 zeigt, zwei Ausnehmungen 84 ausgebildet, die in einem montierten Zustand (Fig. 16) von zwei Stiften 64, 65 durchdrungen werden. Die Stifte 64, 65 weisen jeweils erweiterte Köpfe auf und sind im montierten Zustand fest in jeweils eine in den Abschnitten 18 und 20 einer Spannplatte 12 ausgebildeten Bohrungen eingepreßt, so daß der klammerartige Bügel 80 die beiden Abschnitte 18, 20 lösbar aneinander befestigt. An einem Endabschnitt weist die Klammer 80 einen abstehenden Ansatz 85 auf, mittels dessen der Bügel 80 zur Montage einfach axial verschoben werden kann. Die Klammer 80 ist aus einem Kunststoff oder Metall ausgebildet und hat im wesentlichen eine flache, streifenförmige Gestalt.

Das in den Fig. 18 und 19 dargestellte weitere Ausführungsbeispiel eines erfindungsgemäßen Bügels 90 zur Verbindung zweier Abschnitte 18, 20 einer Spannplatte 12 weist - ähnlich wie das Ausführungsbeispiel der Fig. 14 und 15 - zwei Stifte 66, 67 auf, die in den Abschnitten 18 und 20 ausgebildeten Bohrungen eingepreßt sind. Stift 66 weist einen Kopf auf, während Stift 67 mit einer umlaufenden Nut versehen ist, in die ein Sicherungsring 71 eingelegt ist. Der Bügel 90 ist im wesentlichen als gekrümmter, flacher Streifen aus einem elastischen Material wie Kunststoff oder Metall ausgebildet und weist eine durch eine entsprechende Krümmung des Bügels 90 ausgebildete Öse 91, die im montierten Zustand (vg. Fig. 18) von dem Stift 67 durchsetzt wird, und einen Bogenabschnitt 92 auf, der im montierten Zustand von dem Stift 66 im wesentlichen ausgefüllt wird. Der Bügel 90 ist derart elastisch verformbar, daß ein etwa S-förmiger Endabschnitt 93 derart in Richtung des Pfeils 94 verschwenkbar ist, daß der Bügel 90 um den Stift 66 legbar ist. Im montierten Zustand ist der Bügel 90 weitgehend in seiner ursprünglichen Form und verriegelt die beiden Abschnitte 18 und 20 relativ zueinander.

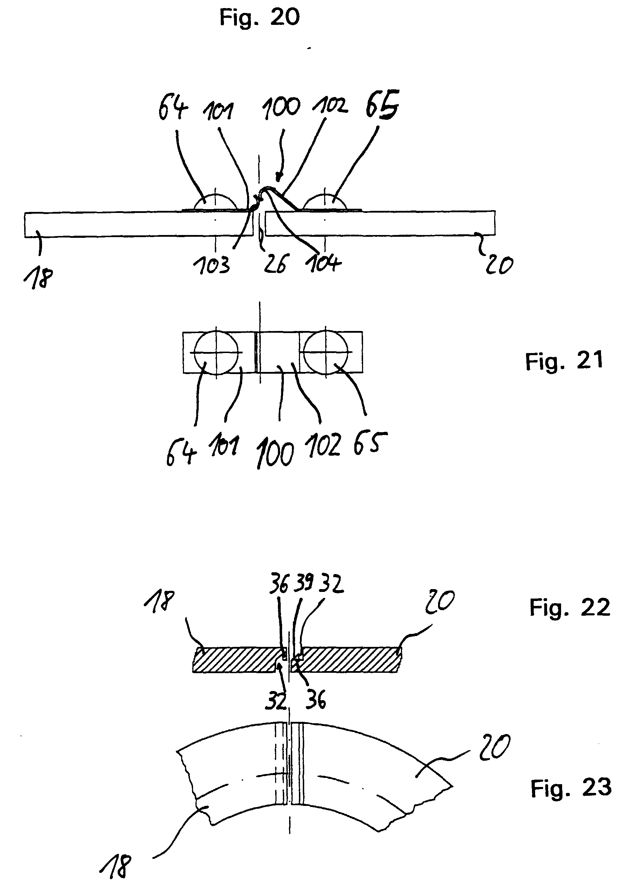

Bei dem in Fig. 20 und 21 dargestellten Ausführungsbeispiel weist der Bügel 100 zwei Teile 101, 102 auf, die jeweils als flacher abschnittsweise gekrümmter Streifen ausgebildet sind und miteinander verrastbar sind. Beide Teile 101, 102 weisen je eine Bohrung auf, die im montierten Zustand (Fig. 20) von Stiften 64, 65 durchsetzt werden, die fest in den Abschnitten 18 und 20 ausgebildeten Bohrungen eingepreßt sind. Beide Teile 101, 102 weisen in ihrem Endbereich je einen gekrümmten Hakenabschnitt 103, 104 auf, die im montierten Zustand hinterenandergreifen, so daß die beiden Teilen 101, 102 miteinander in Eingriff sind. Im montierten Zustand wird eine Trennfuge 26 zwischen den beiden Abschnitten 18, 20 von dem Bügel 100 verdeckt. Fig. 21 zeigt den zweiteiligen Bügel 100 in einer Draufsicht.

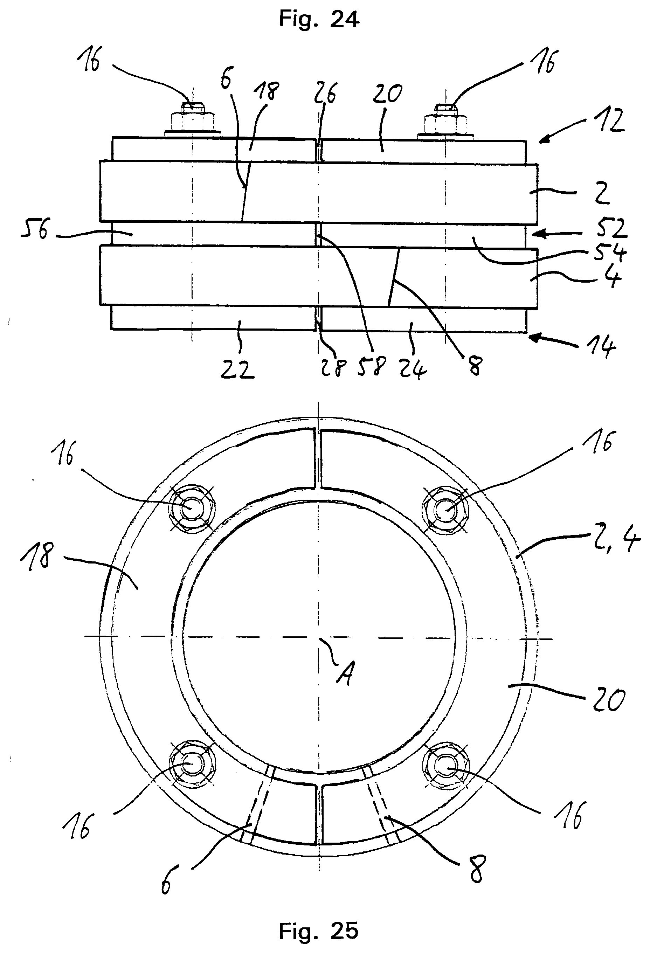

Die Fig. 22 und 23 veranschaulichen ein alternatives Ausführungsbeispiel einer erfindungsgemäßen Dichtungsvorrichtung mit einer zweiteiligen Spannplatte 12, 14, die zwei miteinander verbindbare Abschnitte 18 und 20 aufweist. Die beiden Abschnitte 18 und 20 sind jeweils mit einer Ausnehmung 32 und einem Vorsprung 36 versehen, die sich im wesentlichen in radialer Richtung (vgl. Fig. 23) erstrecken. Zur Verbindung der beiden Abschnitte 18, 20 aneinander werden diese aus der in Fig. 22 gezeigten Stellung aufeinander zu bewegt. Der Vorsprung 36 des Abschnitts 20 weist eine schräge Führungsfläche 39 auf, die mit dem Vorsprung 36 während der Montage im Berührung kommt, so daß die beiden Abschnitte 18 und 20 aus ihrer in Fig. 22 gezeigten fluchtenden Stellung herausbewegt werden. Hat die Führungsfläche 39 den Vorsprung 36 des Abschnitts 18 vollständig passiert, so rastet der Vorsprung 36 des Abschnitts 20 in die Ausnehmung 32 des Abschnitts 18 und der Vorsprung 36 des Abschnitts 18 in die Ausnehmung 32 des Abschnitts 20 ein, so daß beide Abschnitte 18, 20 in einer formschlüssigen Verbindung sind, vgl. Fig. 23.

Das in den Figuren 24 und 25 dargestellte weitere Ausführungsbeispiel ist ebenfalls im wesentlich ähnlich zu der in den Figuren 2 und 3 gezeigten Dichtungsvorrichtung, auf deren obige Beschreibung Bezug genommen wird. Zwischen den verformbaren Dichtkörpern 2, 4 ist zusätzlich ein im wesentlichen starrer Zwischenring 52 angeordnet, der aus mindestens zwei trennbaren Abschnitten 54, 56 zusammengesetzt ist. Der Zwischenring 52 ist so angeordnet, daß eine zwischen den trennbaren Abschnitten 54, 56 verlaufende Trennfuge 58 versetzt zu den Trennfugen 6, 8 der Dichtkörper 2, 4 angeordnet ist.

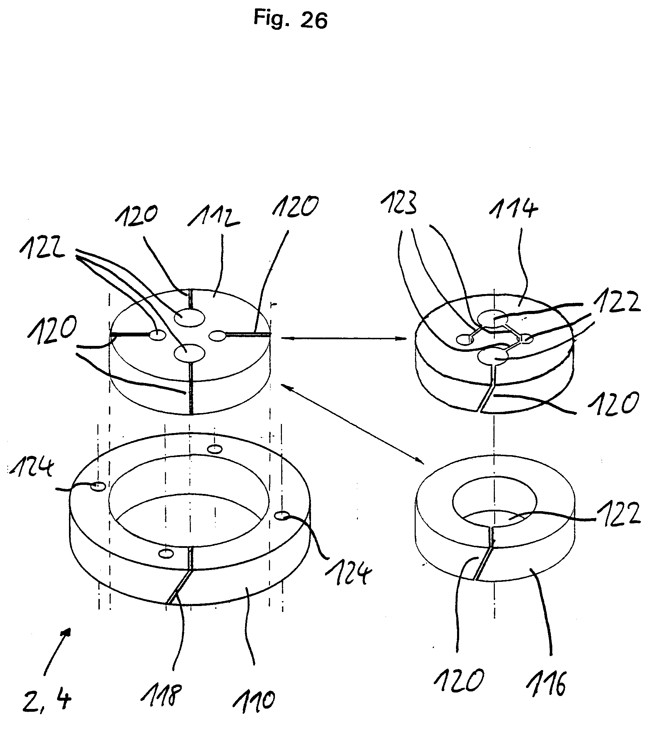

In Fig. 26 ist ein weiteres alternatives Ausführungsbeispiel eines verformbaren Dichtkörpers 2, 4 dargestellt, der in einer erfindungsgemäßen Dichtungsvorrichtung eingesetzt werden kann. Der verformbare Dichtkörper 2, 4 besteht aus einem äußeren Teil 110 und einem inneren Teil 112 oder 114 oder 116, wobei alternativ jeweis eines der inneren Teile 112, 114, 116 in das äußere Teil 110 einsetzbar ist und anschließend mittels der Spanneinrichtung 10 gemäß den in den zuvor beschriebenen und in den Figuren 1 bis 11 sowie 24 und 2 gezeigten Dichtungsvorrichtungen verspannt werden kann.

Der äußere Teil 110 des verformbaren Dichtkörpers 2, 4 ist im wesentlichen kreisringförmig ausgebildet und weist vier Durchgangsbohrungen 124 auf, durch die Spannbolzen 16 der Spanneinrichtung 10 zum Verspannen der Dichtkörper 2, 4 im montierten Zustand hindurchgesteckt sind. Eine Trennfuge 118 durchtrennt den äußeren Teil 110 nach Art eines schrägen Schnitts. Aufgrund der Trennfuge 118 kann der elastisch verformbare äußere Teil 110 derart aufgebogen werden, daß eine hindurchzuführende Leitung in das Innere des äußeren Teils 110 einführbar ist.

Jedes der drei, in das äußere Teil 110 einführbaren inneren Teile 112, 114, 116 weist mindestens eine Trennfuge 120 auf, durch die eine hindurchzuführende Leitung in das Innere des inneren Teils 112, 114, 116 in eine Bohrung 122 zur Aufnahme der Leitung einführbar ist. Der innere Teil 112 weist vier Bohrungen 122 mit zwei unterschiedlichen Durchmessern auf. Je eine Trennfuge 120 führt in eine Bohrung 122. Der innere Teil 114 weist ebenfalls vier Bohrungen 112 mit zwei unterschiedlichen Durchmessern zur Aufnahme von vier hindurchzuführenden Leitungen sowie eine Trennfuge 120 und drei weitere im Innern des Teils 114 angeordnete Trennfugen 123 zur Verbindung der Bohrungen 122 auf. Alternativ kann ein inneres Teil eine andere, an den jeweiligen Anwendungsfall angepaßte Anzahl von Bohrungen zur Aufnahme der Leitungen aufweisen.

Das innere Teil 116 weist eine zentrale Bohrung 122 zur Aufnahme einer Leitung und eine schräg zu einer Zentralachse angeordnete Trennfuge 120 zur Einführung der Leitung in das Innere des inneren Teils 116 auf. Durch einen derartigen geteilten Dichtkörper 2, 4 kann dieser auf einfache Weise an sich ändernde Leitungen angepaßt werden, in dem nur der innere Teil 112, 114, 116 ausgetauscht wird, während der äußere Teil 110 sowie die üblichen Bestandteile einer erfindungsgemäßen Vorrichtung unverändert bleiben.

## Patentansprüche

1. Dichtungsvorrichtung zum abdichtenden Durchführen mindestens einer Leitung durch einen in einer Wand oder dergleichen ausgebildeten Durchbruch, insbesondere zur nachträglichen Montage an bestehenden Leitungen,
mit einem verformbaren Dichtkörper (2, 4), der eine Bohrung (5) zur Aufnahme der Leitung und eine mit der Bohrung verbundene Trennfuge (6, 8) aufweist, so daß der verformbare Dichtkörper in einem Öffnungszustand auf die Leitung aufsetzbar ist, und mit einer Spanneinrichtung (10) zum Verspannen des Dichtkörpers (2, 4) derart, daß dieser im verspannten Zustand abdichtend an die mindestens eine Leitung angepreßt wird,
dadurch gekennzeichnet, daß mindestens zwei in axialer Richtung der Leitung hintereinander angeordnete verformbare Dichtkörper (2, 4) vorgesehen sind und daß die Trennfugen (6, 8) der Dichtkörper (2, 4) im montierten Zustand versetzt zueinander angeordnet sind.

2. Dichtungsvorrichtung nach Anspruch 1, insbesondere nach dem Oberbegriff des Anspruchs 1,
dadurch gekennzeichnet, daß die Trennfuge (6, 8) im montierten Zustand im wesentlichen schrägwinklig zur Längsachse (A) der mindestens einen Leitung angeordnet ist.

3. Dichtungsvorrichtung nach Anspruch 1 und/oder 2, insbesondere nach dem Oberbegriff des Anspruchs 1,
bei der die Spanneinrichtung (10) zwei im wesentlichen formstabile Spannplatten (12, 14) aufweist, die jeweils aus zwei trennbaren Abschnitten (18, 20, 22, 24) bestehen,
dadurch gekennzeichnet, daß die zwei Abschnitte (18, 20, 22, 24) einer Spannplatte (12, 14) zur Befestigung aneinander Vorsprünge (36) und/oder Ausnehmungen (32) aufweisen, die mit korrespondierenden Ausnehmungen (32) bzw. Vorsprüngen (36) des jeweils anderen Abschnitts (18, 20, 22, 24) der Spannplatte (12, 14) formschlüssig in Eingriff bringbar sind.

4. Dichtungsvorrichtung nach Anspruch 1, 2 und/oder 3, insbesondere nach dem Oberbegriff des Anspruchs 2,
dadurch gekennzeichnet, daß die zwei trennbaren Abschnitte (18, 20, 22, 24) einer Spannplatte (12, 14) mittels mindestens eines Bügels (44, 45, 46, 60, 70, 80, 90, 100) aneinander fixierbar sind.

5. Dichtungsvorrichtung nach Anspruch 4,
dadurch gekennzeichnet, daß der Bügel (44, 45, 46, 60, 70, 80, 90, 100) die zwischen den zwei Abschnitten (18, 20, 22, 24) einer Spannplatte (12, 14) ausgebildeten Trennfugen (26) überdeckt.

6. Dichtungsvorrichtung nach Anspruch 3 oder 4,
dadurch gekennzeichnet, daß die Vorsprünge (36) und Ausnehmungen (32) der zwei Abschnitte (18, 20, 22, 24) einer Spannplatte (12, 14) nach Art einer Schwalbenschwanzführung ausgebildet sind.

7. Dichtungsvorrichtung nach Anspruch 3 oder 4,
dadurch gekennzeichnet, daß die Vorsprünge (36) und Ausnehmungen (32) der zwei Abschnitte (18, 20, 22, 24) einer Spannplatte (12, 14) sich im wesentlichen in radialer Richtung erstrecken.

8. Dichtungsvorrichtung nach mindestens einem der vorstehenden Ansprüche,
dadurch gekennzeichnet, daß die Trennfugen (6, 8) der Dichtkörper (2, 4) im montierten Zustand derart versetzt zueinander angeordnet sind, daß sie in einer axialen Projektion nicht miteinander fluchten.

9. Dichtungsvorrichtung nach mindestens einem der vorstehenden Ansprüche,
dadurch gekennzeichnet, daß die zwischen zwei Abschnitten (18, 20, 22, 24) einer Spannplatte (12, 14) ausgebildeten Trennfugen (26) und die Trennfugen (6, 8) der Dichtkörper (2, 4) im montierten Zustand versetzt zueinander angeordnet sind.

10. Dichtungsvorrichtung nach mindestens einem der vorstehenden Ansprüche,
dadurch gekennzeichnet, daß die Trennfugen (6, 8) der Dichtkörper (2, 4) im montierten Zustand im wesentlichen in einer Ebene (E) liegen, die relativ zur Längsachse (A) der Dichtungsvorrichtung geneigt ist.

11. Dichtungsvorrichtung nach mindestens einem der vorstehenden Ansprüche,
dadurch gekennzeichnet, daß die Spanneinrichtung (10) mehrere die Dichtkörper (2, 3, 4) durchsetzende und die Spannplatten (12, 14] miteinander verbindende Spannbolzen (16) aufweist, die mit Hilfe von Spannmuttern (30) unter Zugspannung bringbar sind.

12. Dichtungsvorrichtung nach mindestens einem der vorstehenden Ansprüche 3 bis 23,
dadurch gekennzeichnet, daß eine Spannplatte (15) zur Anlage an der Wand oder dergleichen eine solche Größe aufweist, daß sie nicht in den Durchbruch einführbar ist.

13. Dichtungsvorrichtung nach mindestens einem der vorstehenden Ansprüche,
dadurch gekennzeichnet, daß zwischen den verformbaren Dichtkörpern (2, 4) ein im wesentlichen starrer Zwischenring (52) angeordnet ist.

14. Dichtungsvorrichtung nach Anspruch 13,
dadurch gekennzeichnet, daß der Zwischenring (52) aus mindestens zwei trennbaren Abschnitten (54, 56) zusammengesetzt ist.

15. Dichtungsvorrichtung nach Anspruch 14,
dadurch gekennzeichnet, daß der Zwischenring (52) so angeordnet ist, daß eine zwischen den trennbaren Abschnitten (54, 56) verlaufende Trennfuge (58) versetzt zu den Trennfugen (6, 8) der Dichtkörper (2, 4) angeordnet ist.

16. Dichtungsvorrichtung nach mindestens einem der vorstehenden Ansprüche,
dadurch gekennzeichnet, daß der oder die verformbaren Dichtkörper (2, 4) jeweils mindestens einen äußeren Teil (110) und mindestens einen in den äußeren Teil (110) hineinsteckbaren inneren Teil (112, 114, 116) aufweist und daß der äußere Teil (110) und der innere Teil (112, 114, 116) jeweils mindestens eine Trennfuge (118, 120) aufweist, durch die eine Leitung in den äußeren Teil (110) bzw.inneren Teil (112, 114, 116) einführbar ist.

17. Dichtungsvorrichtung nach Anspruch 16,
dadurch gekennzeichnet, daß der innere Teil (112, 114) mehrere Bohrungen (122) zur Aufnahme mehrerer Leitungen aufweist.
